Europäisches Patentamt

European Patent Office

Office européen des brevets

(19)

(11) Publication number: **0 433 049 A2**

# (12) EUROPEAN PATENT APPLICATION

(21) Application number: **90313527.5**

(22) Date of filing: **12.12.90**

(51) Int. Cl.$^5$: **G08B 5/36**

(30) Priority: **12.12.89 GB 8928047**

(43) Date of publication of application:
**19.06.91 Bulletin 91/25**

(84) Designated Contracting States:
**BE CH DE FR GB LI LU NL**

(71) Applicant: **Horspool, Margot**
**4 Millbrook, Claygate**
**Esher, Surrey KT10 9EJ (GB)**

(72) Inventor: **Horspool, Margot**
**4 Millbrook, Claygate**
**Esher, Surrey KT10 9EJ (GB)**

(74) Representative: **Cooke, William Douglas et al**
**Hughes Clark & Co. 63 Lincoln's Inn Fields**
**London WC2A 3JU (GB)**

(54) **Multistation indicator system.**

(57) A multistation indicator system is decribed comprising a plurality of mulistation display units (1) with a visual display for each station (2), each unit being connected to the other units in the system. A pattern of 40 stations (2) are formed as a matrix, the 'x' axis (3) being designated with the passive languages being interpreted while the 'y' axis (4) is designated with the active languages into which the passive languages are interpreted. Each station (2) has visual indicating means such as LED's (5) indicating where the interpreter of the passive language is situated. Power is supplied to each unit (1) to activate the units (1) of the various stations and switching means is associated with each display unit (1) to indicate which of the multistations are active.

EP 0 433 049 A2

# MULTISTATION INDICATOR SYSTEM

This invention relates to a multistation indicator system more particularly but not exclusively to a relay indicator system for use by simultaneous language interpreters at international conferences where a large number of languages require to be interpreted.

Recently there has been a development in using interpreters where a large number of different languages are spoken on a conference floor particularly in international organisations such as the European Community or the European Parliament where a large number of different languages is required to be interpreted simultaneously. Due to the proliferation of languages spoken by the members of these organisations, which in the case of the European Community has now reached nine, it is nearly always found that several of the languages spoken on the conference floor cannot be interpreted directly into all other languages. As a result, the use of a relay system has been increasingly used.

The term 'relay' is used to indicate that the 'passive' language i.e. the language which is being interpreted may be relayed from an 'active' language i.e. the language in which it is being interpreted to another 'active' language. For example, if the passive language is Dutch this may be interpreted into English or French and a German interpreter who does not know Dutch can relay from either English or French into German to enable the German listener to follow the speech in Dutch.

In the case of more unusual languages these tend to be covered by only one or two interpreters located in separate interpreters' booths. This has the disadvantage that interpreters in other booths who do not know these languages are unable to ascertain where to turn for the relay. At present this information tends to be conveyed by word of mouth or hand signals from one interpreters' booth to another. Another disadvantage is that although a programme of meetings on any one day and the names of interpreters allocated to them is posted up in most organisations, with symbols by the names of those interpreters who interpret from the more unusual languages, difficulties can arise if one interpreter covering a particular language has to leave the booth and even though another interpreter has ascertained which booth is available for relay, they often find out too late that the availability for interpretation or relay of a particular language has changed.

An aim of the present invention is to overcome the above described disadvantages and provide a multistation indicator system which shows the current availability and location of interpreters of each language.

According to one aspect of the present invention there is provided a multistation indicator system comprising a plurality of multistation display units with a visual display for each station, each unit being connected to the other units in the system, a power supply to each unit to activate the visual displays of the various stations and switching means associated with each display unit to indicate which stations of the multistations are active.

Preferably, the stations of the multistation unit are identified along two axes of the unit i.e. an 'x' and 'y' axis with the names of 'passive' and 'active' languages.

Conveniently, the multistation display unit is formed as a matrix of the 'passive' and 'active' lanaguages light indicating means at the coordinates showing which languages are being interpreted.

In a preferred construction switching means are provided to operate the station light coordinate of the language being interpreted by the interpreter in the booth where the multistation display unit is located.

According to another aspect of the present invention there is provided an electronic circuit comprising a plurality of display units each having a visual warning lamp, said lamps being connected in parallel in pairs with a power supply of 10 to 15 volts to all display units, two counters controlled by a common clock connected by a co-axial synchronising cable and one extra cable.

If the scanning frequency of the electronic circuit is between 10 to 15 Khz or less, it can be connected by a low loss four core cable, one wire of the cable carrying intelligence information from each display unit.

Conveniently a manual scanning switch is provided to locate a lamp or circuit failure on each display unit.

An embodiment of the present invention will now be described, by way of example only, with reference to the accompanying drawings, in which :

Fig. 1 is a diagrammatic view of a multistation visual display unit ; and

Fig. 2 is an electronic circuit diagram of the multistation indicator system according to the invention.

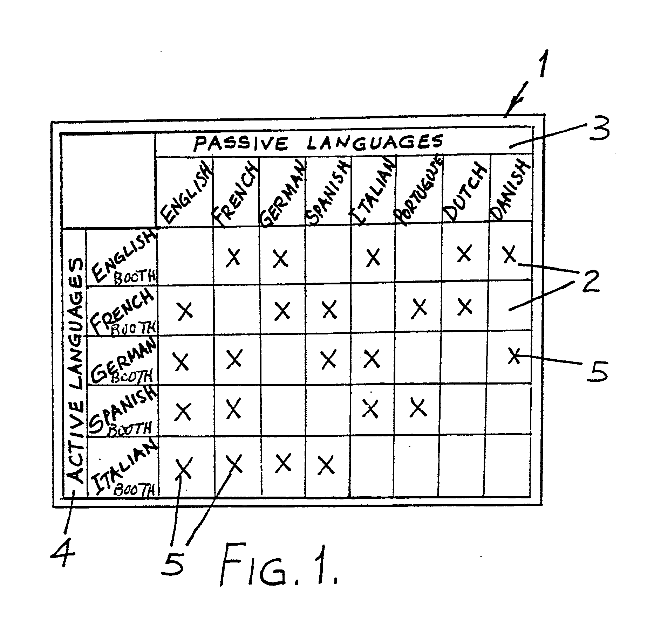

The multistation visual display unit 1, shown in Fig. 1, comprises a pattern of 40 stations 2 formed as a matrix, the 'x' axis 3 is designated with the passive languages being interpreted in the various interpreters' booths (not shown). In the embodiment shown there are eight languages English, French, German, Spanish, Italian, Portuguese, Dutch and Danish while the 'y' axis 4 is designated with the 'active' languages into which the 'passive' languages are interpreted viz English, French, German, Spanish and Italian. Each station 2 of the matrix is provided with visual indicating means which may be small lights 5 such as LED's (Light Emitting Diodes) which indicate the location i.e.

the booth where the interpreter of the passive language is situated.

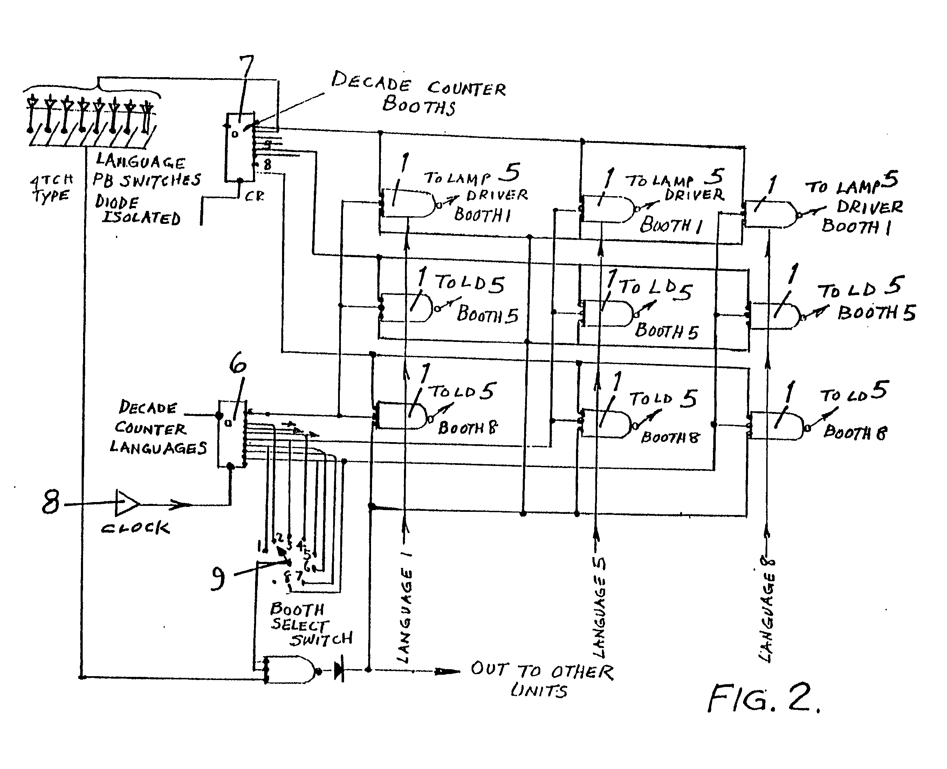

The electronic circuit diagram illustrated in Fig. 2 shows a preferred embodiment of a language routing display system having nine visual display units 1 arranged in a matrix to represent interpreters 'Booth 1' 'Booth 5' and 'Booth 8'.

For simplification of description of the circuit the switching contacts of only three booths and three languages is shown.

Two decade ring counter IC's 6 and 7 are employed to operate a plurality of lamps represented by LED's 5, counter 6 is allocated for language requirements while counter 7 is used for booth identification. Ring counter 6 is driven by an external clock pulse 8 while counter 7 has its clock output connected to output 0 of ring counter 6. Both counters are thus under the influence of the clock frequency, but counter 7 is driven at a tenth of the speed of counter 6.

The decade outputs of each counter are used to control the LED's 5 arranged in the matrix providing eight rows of eight LED's. The horizontal LED's are allocated to the booths while the vertical rows of LED's are allocated to the languages.

Switching means 9 are incorporated in the circuits to utilise the scanning sequence and provide selective intelligence which can be altered as desired to suit changing requirements in the respective booth. For example, if 'Booth 3' is required to work from languages 3 and 4 the LED's 3 and 4 of the matrix will be illuminated on row 3 in all booths.

The switching arangements operate as follows :

Each LED 5 in the matrix (in the present circuit 8 × 8 = 64 in all) has its own drive each input is controlled by a triple AND gate. A positive output from the gate requires that each input receives a simultaneous positive voltage. Thus if input 1 of a triple gate is connected to output 2 of counter 7 and if input 2 of the same triple gate is connected to output 3 of counter 6 it is only necessary to make the third input gate positive for the gate to activate the driver and light the LED. This can only happen at one instant when the appropriate outputs of the counters coincide and the third input gate is made positive.

Each scanning sequence will pass through an 'enable' condition for each LED, but when this condition occurs the activation is dependent upon the state of the triple input gate 3. Thus the third gate, one for each LED, provides the intelligence for the whole system. The information is obtained from an integration of the booth and language appropriately set up by switches controlled by an interpreter.

The language routing display system is designed to work inside interpreters' booths simultaneously in conjunction with, but entirely separate from, the other equipment that the interpreters require for their work.

The system is designed to provide a means whereby each booth instantly knows the distribution of 'passive' operating languages in each of the other booths. This is particularly relevant where a large number of languages is spoken on the conference floor.

In operation the switches on each multistation visual display unit are set in each booth by the interpreters to indicate all the 'passive' languages available from the team of interpreters working in the booth. This information together with any changes is transmitted to all the display units in the system.

The number of interpreters in each booth will vary according to the number of languages being spoken at the conference or meeting. There will always be a minimum of two but this may rise to three if the number of languages exceeds six and can even increase to four in some booths in the case of a large number of 'rare' languages being spoken at the conference.

A detailed description of the relay procedure is as follows :

The difference between 'active' and 'passive' languages is that the active language is the language into which each booth interprets i.e. one language per booth each booth interpreting into English (booth 1) into French (booth 2), into German (booth 3), into Italian (booth 4) and so on. The passive languages are those from which each booth interprets, which may well be a greater number than the active languages. This would mean if a language is passive but not active, that the language may be spoken on the floor of the conference and will be interpreted into the active languages, but there will not be any interpretation into that language.

If Dutch is taken as an example of a passive language at a meeting with four active languages it is common practice that only one or at most two on the team of eight interpreters (two per active language and per booth) will understand Dutch, e.g. one of the interpreters in the English booth and one in the French booth. When Dutch is spoken on the floor these two will interpret into English and into French respectively, while the interpreters in the German and Italian booths will switch their listening channel from the floor to either the English or the French channel and interpret into German or Italian the speech they hear on that channel, this procedure is called relay.

The multistation indicator system of the present invention would reduce the risk of 'double relay' i.e. when the German interpreter who is taking the Dutch interpretation from the English channel does not realise that one interpreter has left the English booth or may simply be resting, so that his or her colleague is now taking Dutch from the French booth, he or she will be listening to a twice-removed interpretation from Dutch into French and then into English. This is detrimental to the quality and accuracy of the interpretation as well as causing a delay for the listener.

By using the indicator system of the present invention all interpreters will know at any time in which booth the relay for a particular language is available. Thus, the risk of a language not being interpreted because of the absence of the interpreter(s) translating from that language is eliminated. An interpeter working from a particular language will know if he or she can safely leave the booth if the relay light of that language is on in at least one other booth, the risk of "double relay" is avoided.

Even with the commoner languages which may be covered in more, but not all, booths, any interpreter can choose the relay for such a language from the booth he or she prefers. For example, someone may prefer to take Spanish relay from the Italian booth if it is available there, rather than from the French or English booth.

## Claims

1. A multistation indicator system comprising a plurality of multistation display units (1) with a visual display (2) for each station, each unit being connected to the other units in the system, a power supply to each unit (1) to activate the visual displays (2) of the various stations and switching means (9) associated with each display unit (1) to indicate which stations of the multistations are active.

2. A multistation indicator system as claimed in Claim 1, characterised in that the stations of the multistation unit (1) are identified along two axes of the unit i.e. an "x" (3) and "y" (4) axis with the identifications of "passive" and "active" languages.

3. A multistation indicator system as claimed in Claims 1 or 2, characterised in that the multistation display unit (1) is formed as a matrix of the "passive" and "active" languages, light indicating means (5) at the coordinates showing which languages are being interpreted.

4. A multistation indicator system as claimed in any preceding claim, characterised in that switching means (9) are provided to operate the station light (5) coordinate of the language being interpreted by the interpreter in the booth where the multistation display unit (1) is located.

5. A multistation indicator system as claimed in any of Claims 2 to 4, characterised in that the " X " : (3) and "Y" (4) axis is identified with the names of the "passive" and "active" languages.

6. An electronic circuit comprising a plurality of display units (1) each having a visual warning lamp (5), said lamps (5) being connected in parallel in pairs with a power supply of 10 to 15 volts to all display units (1) two counters (6, 7) controlled by a common clock connected by a co-axial synchronising cable and one extra cable.

7. An electronic circuit as claimed in Claim 6, characterised in that if the scanning frequency of the electronic circuit is between 10 to 15 khz or less, it can be connected by a low loss four core cable, one wire of the cable carrying intelligence information from each display unit (1).

8. An electronic circuit as claimed in Claims 6 or 7, characterised in that a manual scanning switch (9) is provided to locate a lamp (5) or circuit failure on each display unit (1).

**FIG. 1.**

FIG. 2.